# EUROPEAN PATENT APPLICATION

(11) **EP 3 751 458 A1**
(43) Date of publication of application: **16.12.2020**
(21) Application number: 19180285.9
(22) Date of filing: 14.06.2019
(51) Int. Cl.: G06K 9/20, G06K 9/62

(54) **METHOD FOR THERMOGRAPHIC ANALYSIS USING A HYBRID CONVOLUTIONAL NEURAL NETWORK**

(71) Applicant: Sobolt B.V., 3032 AC Rotterdam (NL)
(72) Inventor: Hetharia, Daniël Benjamin, 3051 SW Rotterdam (NL); Fabius, Otto, 1012 ZK Amsterdam (NL); Nieuwland, Arthur, 3527 KV Utrecht (NL); van Daal, Tom Adrianus Antonius, 1096 GJ Amsterdam (NL)
(74) Representative: van Driel, Hedwig

(57) **Abstract**

A thermographic analysis method is proposed, comprising the following steps: acquiring thermal infrared (TIR) image data of a structure; acquiring visible light image data of the structure; processing the TIR image data through a first part of a convolutional neural network (CNN) to obtain a first intermediate result; processing the visible light image data through a second part of the CNN to obtain a second intermediate result, the second part comprising a plurality of convolutional layers; concatenating the first intermediate result and the second intermediate result to obtain a concatenated intermediate result and processing it to obtain thermographic analysis data including coordinates of identified segments of the input images associated with possible thermal leaks as well as an associated probability score for each identified segment; and providing the thermographic analysis data to a user. A method of training a convolutional neural network for thermographic analysis is also proposed.

## Description

### Field of the invention

The invention relates to a computer-implemented method for thermographic analysis, specifically for identifying potential thermal leaks from thermal infrared and visible light image data of a same structure. The invention further relates to a computer-implemented method of training a neural network for use in thermographic analysis.

### Background

Through thermal infrared (TIR) images it is possible to map heat loss in buildings. By analyzing those images, also referred to as thermograms, possible heat leakages can be identified. The client (building owner) can use that information to improve insulation and thus save energy and money.

The TIR images are typically taken by thermographers that walk through a street with a TIR camera. They take a few (ca. 1-3) pictures of each house to make sure all relevant features are captured. Often, the TIR camera also takes an RGB image at the same time. The latter image eases the later interpretation of the thermogram. Preferably, the temperature difference between the inside of the building and the outside during picture-taking should be at least 10 °C. This means that in some countries pictures can only be taken in particular seasons and during particular parts of the day.

After TIR pictures have been taken, the thermographer uploads the thermograms to an environment such as FLIR Tools. Such software can be used to edit and analyze the images. The analysis is primarily carried out by experts as lay people lack the required expertise to interpret thermograms. In FLIR Tools, the color palette and range can be changed and several thermal parameters, such as the emissivity, can be adjusted. Furthermore, the user can indicate points of interest and retrieve information about those points such as the local temperature. After various points have been saved for a given set of thermograms, a PDF report can be exported. This report lists all thermograms accompanied by quantitative information about the indicated points of interest. Such a report is often added as an attachment to a more client-oriented, actionable report that is separately written by the thermographer.

The manual analysis and identification of thermal/heat leakages is a relatively complicated and time-consuming process. An experienced thermographer can easily spend 20 minutes on a single thermogram in FLIR Tools. This manual exercise is often regarded tedious and forms a crucial driver of the costs of a heat loss report. Furthermore, the result is highly dependent on the thermographer's expertise and skill level.

Image analysis, including instance segmentation of images, object recognition, and classification, is a field in which it is increasingly common to use artificial intelligence (AI) techniques, in particular using neural networks.

For instance, WO2019030410 describes a combination of two convolutional neural networks (CNNs) that is used to determine a pathology in 3D image data. The two networks together determine a particular target label in a certain volume of interest of the body. Subsequently, the target labels and associated descriptions of the pathology are exported to a digital medical report.

There are also already some techniques for extracting information from a combination of TIR images and associated RGB images, through what is referred to as "multimodal fusion". This has been done for instance in the context of object detection for autonomous vehicles in Takumi et al., Multispectral object detection for autonomous vehicles, Proc. Thematic Workshops of ACM Multimedia, 2017*:* it may be useful in these cases as for instance other vehicles or pedestrians may in certain situations be more easily identified by their heat signature than from an RGB image.

However, AI techniques are not generally applied to the detection of heat leakages in thermograms, and it is not immediately apparent how the complex thermographic analysis now performed by thermographers could be performed using a neural network structure. Therefore, the present invention is aimed at finding a method allowing for efficient and accurate computer-aided interpretation of thermograms.

### Summary of the invention

Based on the above, a computer-implemented method for thermographic analysis is proposed, comprising the following steps: acquiring thermal infrared (TIR) image data of a structure; acquiring visible light image data of the structure; processing the TIR image data through a first part of a convolutional neural network (CNN) to obtain a first intermediate result; processing the visible light image data through a second part of the CNN to obtain a second intermediate result, the second part comprising a plurality of convolutional layers; concatenating the first intermediate result and the second intermediate result to obtain a concatenated intermediate result; processing the concatenated intermediate result to obtain thermographic analysis data, the thermographic analysis data including coordinates of identified segments of the input images associated with possible thermal leaks as well as an associated probability score for each identified segment; and providing the thermographic analysis data to a user, preferably through a graphical user interface.

Note that generally, the visible light image data will simply be an RGB image. It may be considered, when using a neural network, to focus only on the TIR data for the analysis, in particular since in certain countries thermograms tend to be taken early or late in the day, resulting in dark, low-quality images. However, a hybrid CNN, which processes both TIR and visible light image data, at least in part using separate parts of the network, has turned out to have advantageous results. In particular, using the visible light/RGB images for segmentation has turned out to be advantageous.

There are several ways to configure such a hybrid CNN.

For instance, the processing of the concatenated intermediate result to obtain thermographic analysis data may be performed using a third part of the CNN comprising a plurality of convolutional layers. In such a configuration, part of the processing is performed by the second part on the visible light image data alone. Then, in the concatenation step, the result of the processing of the TIR image data is added to these results, and further convolutional layers process the concatenated results. Note that the processing of the TIR image data may, in these CNNs, be very simple, with the first part being just an identity layer (or comprising an identity layer), but more complex processing is also possible. The advantage of the former may be that the RGB image data is effectively segmented prior to the concatenation step, enabling a better differentiation between the various visible features of the structure in the output result.

Alternately (or additionally) the first part may comprise a plurality of convolutional layers. In such CNNs, it is possible to perform more complex processing of the TIR image data by itself, before the concatenation step.

Note that the above-described possibilities are not mutually exclusive: the method may employ both a first part including a plurality of convolutional layers, to process only the TIR image data, as well as a third part including a plurality of convolutional layers, to then further process the concatenation result.

TIR pixels tend to be relatively 'expensive', especially when compared to RGB pixels. Therefore, it will often be the case that the TIR image data has a first resolution and the visible light image data, which is preferably RGB image data, has a second resolution, and wherein the first resolution is lower than the second resolution.

This may lead to issues at the concatenation step, since ideally the first intermediate result and the second intermediate result have comparable dimensions. Therefore, the method may include a step of resampling the visible light image data to the first resolution, prior to processing by the second part. The second part of the CNN may also include more or different pooling layers than the first part of the CNN to account for different resolutions. The method may also include a step of adapting the first and/or second intermediate results to make concatenation possible: for instance, the first intermediate result could be up-sampled and/or the second intermediate result could be down-sampled. The skilled person will be aware of various solutions to ensure that the concatenation step can be performed without issues.

The layers of the second part may be configured to form a sub-network with an architecture particularly suitable for segmentation of visible light image data. The second intermediate result will then include segmentation results. Examples are deep residual networks. However, the skilled person will be familiar with various suitable neural network architectures, and architectures that have not yet been developed could also be suitable for use in the claimed method.

The providing of the thermographic analysis data to a user, in particular when this is done through a graphical user interface may be done in various ways. For instance, as will be explained in more detail with reference to the figures, it may include displaying an estimated outline of the identified segments of the input images associated with possible thermal leaks together with the visible light image data. The thermal analysis data may additionally comprise classification information associated with each possible thermal leak, and/or a temperature profile for each possible thermal leak. This additional information should also be accessible to a user, preferably in a visual way.

The method may comprise receiving user input indicating the selection of a possible thermal leak via the graphical user interface; and displaying the probability of the selected possible thermal leak being a thermal leak, preferably in combination with a classification and/or temperature profile for the selected possible thermal leak.

The method may comprise receiving user input indicating the selection of a position via the graphical user interface; providing information from the input TIR image data for the selected position. This may allow an experienced user to verify whether the results conform to what is expected.

The method may comprise receiving user input indicating the setting of a probability threshold; and adapting the graphical indication of the possible thermal leaks in relation to the visible features of the structure according to the indicated probability threshold. For instance, this can be done by providing a slider allowing a user to set a probability threshold for the heat leakage probabilities that one wishes to include. This functionality allows the user to adjust the sensitivity for heat leaks.

The method may comprise receiving user input via the graphical user interface indicating modifications to the output; and adapting the output according to the received user input. The adapted output is then preferably used as training material for the CNN to further improve and refine the method. In cases where the thermal analysis is provided using a plurality of polygons, this will for instance be implemented by allowing a user to indicate removal, redrawing, and/or addition of polygons via the graphical user interface.

The method may additionally comprise the steps of: acquiring additional information about the structure relevant for the thermal properties of the structure; and providing the additional information as further input for the CNN, preferably at the concatenation step. For instance, such additional information may relate to materials used in the structure, to the heating method used in the structure, etc.

The claimed method in its various forms described above can be used to guide and assist experts in the examination process, which significantly accelerates the overall analysis. After the potential heat loss is identified and classified using the method, the user (i.e. the expert) is able to assess the model predictions through a (preferably online) tool. For instance, the tool may allow for the removal, redrawing, and addition of polygons. This way the user can always overrule the model predictions. In practice, most model predictions have been found to be highly accurate, so that there is not much work required for the user.

After the user has finished the examination of the model predictions for a given set of annotated thermograms, the tool can generate a report containing the suggested classifications for the identified heat leakages in the building. Additionally, the report can contain various metadata extracted from the thermogram, such as the thermal sensitivity and resolution of the TIR camera, time of day, and set emissivity. Furthermore, the report can contain various graphs of climate variables such as wind speed and direction, temperature, and solar radiation. This weather information is relevant for the interpretation of thermograms and is preferably available for the day the TIR image was taken as well as for the day before that. The report can also provide an overall judgement of the (thermal) quality of the building, based on the type and frequency of certain classifications. Finally, concrete advice can be provided to the building owner as to how the building can be better insulated.

The claimed method therefore enables heatscan analyses at much larger scales due to saved time and costs. Today, thermographic analyses are mostly limited to single households, streets or housing complexes. The expert support tool, however, supported by the claimed method, can be used to scan entire neighborhoods or cities. After all, a large collection of thermograms can be uploaded to the web tool and interpreted all at once by the underlying CNN, requiring at most expert verification. The computer-aided analysis of thermograms thus provides a step towards a more sustainable future.

The invention also relates to a computer-implemented method of training a neural network for use in thermographic analysis, preferably for use in the thermographic analysis method described above. The training method comprises the following steps: providing training data including a plurality of annotated data points, each annotated data point including: thermal infrared (TIR) image data of a structure; visible light image data of the structure; for each thermal leak identified by a thermographic expert based on at least the TIR image data: coordinates of a polygon indicating the boundary of the thermal leak; a class label, identifying a type of thermal leak, wherein the class label is selected from a hierarchical classification tree; providing a convolutional neural network (CNN) comprising at least a first part; a second part including a plurality of convolutional layers; and a concatenation layer configured to concatenate the output of the first part and the output of the second part; and training the CNN using the TIR image data of the annotated data points as the input for the first part, the visible light image data of the annotated data points as the input for the second part, and the coordinates and class labels for each identified thermal leak of the annotated data points as labels.

As is clear from the provision of labels, the proposed training method is a supervised learning training method. The optimization criterion may be based on a linear combination of loss functions, such as a class loss, a bounding box loss, and a mask loss, depending on the details of the precise network architecture. The weight of each part of the total loss is generally not fixed in the method, but will be established using a carefully selected combination of losses for the annotated dataset.

Various popular training schemes widely used in literature are applicable (such as stochastic gradient descent, Adam, and AdaGrad), as well as choices of hyperparameters. Processing the images in minibatches (as opposed to one at a time) is possible but optional; in general small batches (≤ 8) are used. Larger batches improve performance but are not always practical due to limited GPU memory.

While thermography is to a certain extent subjective, the use of a hierarchical classification tree seems to yield more consensus: preferably, the training data is generated by asking a plurality of experts to label the thermographic images, and we have found that in most cases a consensus is reached. The annotation process is preferably performed in a (preferably online) environment where one can draw polygons on images, and then choose a classification from the classification tree for each polygon.

For each heat leak polygon drawn on a thermogram, a classification is chosen by selecting a classification in a classification tree. Naturally, this tree is different for different types of buildings. For homes in the Netherlands the classification tree may for instance be as will be further illustrated at the hand of the figures.

With the classification tree the expert knowledge can be captured in terms of 'computer language' that can subsequently be fed into the network. The utility of a systematic approach regarding heat leakages is not limited to the scope of this invention: the classification tree also forms a useful tool in the daily activities of thermographers.

The CNN used for training may have different properties. It may comprise a third part, comprising a plurality of convolutional layers, configured to process the combined output of the first part and the output of the second part. Alternately or additionally, the first part may comprise a plurality of convolutional layers.

The CNN may have randomly initialized weights; or initial weights obtained by pre-training at least a subset of the layers of the CNN using a different annotated dataset. The randomly initialized weights may for instance be drawn from a normal distribution. However, it may be preferable to use pre-training to obtain the weights, since this allows for transfer learning. A caveat is that (parts of) the network must have the same structure and number of parameters in each layer for transfer learning to be possible.

The method may further comprise data augmentation steps. For instance, it may comprise performing one or more transformations on the input TIR image data and/or the input visible light image data to enhance the training set.

Such data augmentation steps may overcome the problem of overfitting which arises when using a powerful model on a limited amount of training data. It generally includes modification of the input data, for instance based on a random parameter chosen for each iteration.

Some augmentations may only be performed on RGB data to preserve the physical information present in the (relative and absolute) values in the TIR data. Possible augmentations/modifications may include: affine transformations, linear brightness transformations, contrast transformations and noise addition.

The method may also comprise setting all values of the visible light image data to zero for a subset of the annotated data points for a certain portion of the training time. In this way, a two-tailed (RGB and TIR) model can be trained to work on TIR images only, to ensure that the method works well even in cases when RGB images are not available.

Finally, the invention also relates to a computer-readable medium comprising instructions which, when executed by a computer, cause the computer to carry out any method described above.

### Brief description of the figures

The invention will be further elucidated at the hand of the figures, wherein:
Fig. 1 is a block diagram abstractly showing one possible architecture for the proposed CNN;
Fig. 2 and Fig. 3 are block diagrams abstractly showing two other possible architectures for the proposed CNN;
Fig. 4 illustrates an embodiment of the graphical user interface;
Fig. 5A and Fig. 5B show a possible hierarchical classification tree that could be used in training a CNN according to the invention.

### Detailed description of the figures

Note: in the figures, for the sake of simplicity, the thermal infrared image data is labeled "TIR image" and the visible light image data is labeled "RGB image". However, this should not be interpreted as limiting the input to single images, and in particular, it should not be interpreted as limiting the input visible light image data to a specific color space.

Note furthermore that the use of neural networks for image analysis often entails some type of pre-processing to transform the data into a form that can be used for input. Since these steps will be well-known to the skilled person, and depend amongst other things on the chosen input, they are omitted in the below description and in the figures. Likewise, as is well-known to the skilled person, convolutional neural networks usually, aside from convolutional layers, also comprise other types of layers. The omission thereof from the figures and associated descriptions should not be taken as evidence of the absence of such other layers.

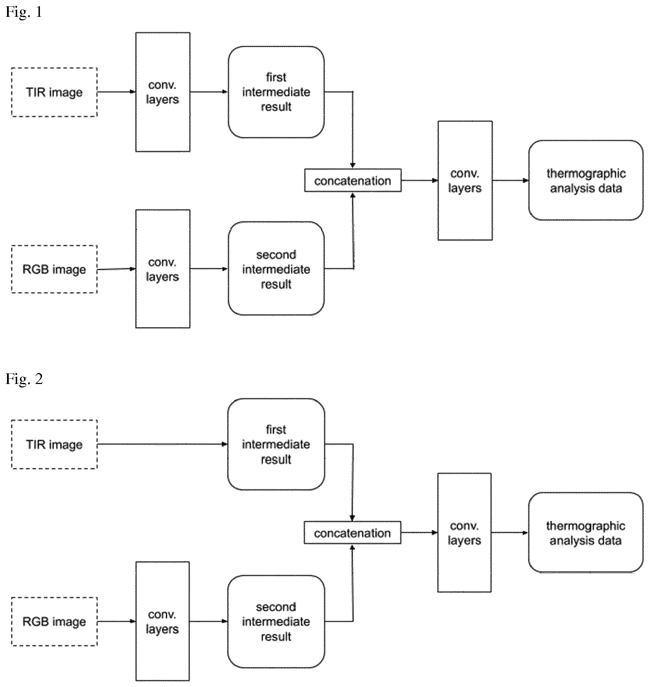

Fig. 1 illustrates a possible architecture for a CNN which can be trained for thermographic analysis. In particular, it shows an architecture in which the CNN has three parts, each comprising a plurality of convolutional layers. A TIR image (or, more generally: TIR image data) is input to the first part, leading to a first intermediate result. An RGB image (or, more generally: visible light image data) is input to the second part, leading to a second intermediate result. These two intermediate results are then concatenated - as noted above, this may require some additional processing of at least one of the intermediate results, or the first and second part could be configured in such a way that the intermediate results are already suitable for concatenation.

The output of the concatenation step is then input to the third part, with the desired thermographic analysis data as output.

Note again that Fig. 1 is an abstracted, simplified illustration of a possible architecture, and that examples of the architecture are likely to include many more elements than just the convolutional layers, especially in the third part: for instance fully connected layers, bounding boxes, masks, softmax layers, and other elements well known to the skilled person can be included to yield the output in a usable form.

Fig. 2 illustrates another possible architecture for a CNN which can be trained for thermographic analysis. In particular, it shows an example in which the first part, which processes the thermal infrared (TIR) image (data) to produce the first intermediate result, does not comprise convolutional layers. It may in fact be as simple as an identity layer, though it may also include additional elements, such as for instance an element to upsample a TIR image with a lower resolution than a corresponding RGB image, so as to ensure that the first and second intermediate results may be concatenated.

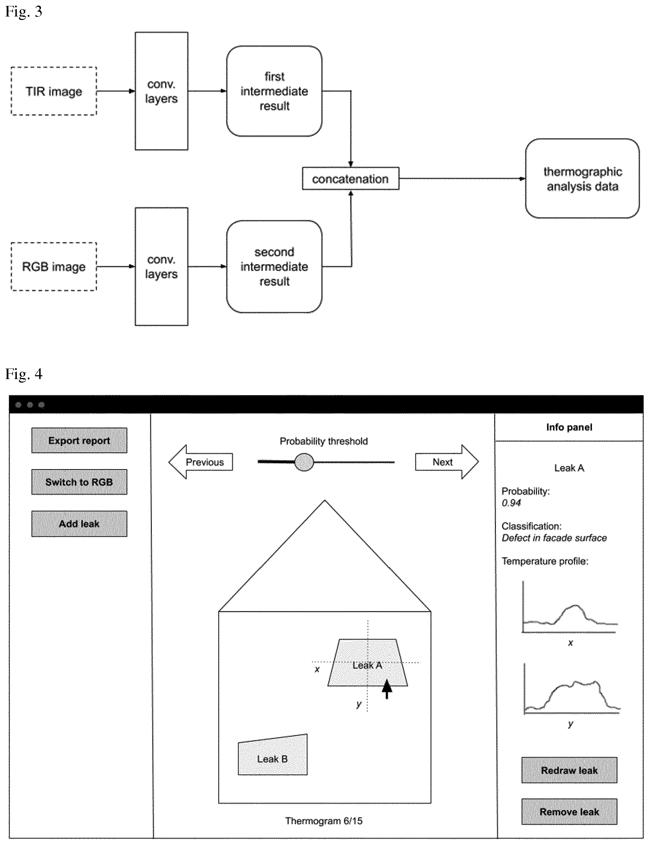

Fig. 3 illustrates another possible architecture for a CNN which can be trained for thermographic analysis. In particular, it shows an example in which the third part, which processes the concatenated result, does not comprise convolutional layers. It may be that the concatenation by itself is sufficient, or almost sufficient, to obtain the desired thermographic analysis data, in which case further convolutions may not be needed.

Fig. 4 shows an example of a graphical interface for presenting the obtained thermographic analysis data to a user. For instance, such a graphical interface could be provided using an app or web page, accessed from a user device such as a smartphone, tablet, laptop or personal computer, on which the method as described above is executed, or which communicates with a further device, such as a remotely located server, on which the method is executed. More generally, it will be clear that the proposed method is a computer-implemented method which may be executed on any suitable computer device; and a system including a memory on it having stored thereon computer instructions which, when executed by the system, lead the system to perform the method as described, is also part of this application.

As an example, the method could take the form of an expert support web application. The expert can upload a set of thermograms upon which the model predictions are returned regarding potential heat leakages. A slider can be used to adjust the sensitivity of the predictions, as seen in Fig. 4. Upon selecting a particular polygon, more information on the type of heat leakage is provided in a panel on the right side. Besides the precise classification, also temperature profiles along specified axes are provided. Based on this information the user is able to manually remove or redraw heat leakage polygons or add new ones that the model missed. The user can also switch to an RGB view. After the user has finished verifying the model predictions for a set of thermograms, an automatically generated PDF report can be exported containing the annotated thermograms, local temperature measurements, metadata from the TIR camera, as well as notes from the expert. In this example, this report could be rather abstract in nature and primarily serve to guide the expert in composing an actionable report that is useful for the client. However, it could also be a report already listing possible actions/improvements, which can be used by a client without requiring expert intervention or input.

The web application may for example be connected via a web application programming interface (API) to the AI model. The API then processes a TIR image, optionally accompanied by an RGB image, and provides a JSON response. First, it preprocesses the uploaded TIR and RGB images (these are typically contained in the same file) and sends them to the model server. The model then outputs predictions in the form of masks specifying the locations of heat leaks, labels of their classes, their probability, and corresponding bounding boxes. Those predictions are subsequently sent back to the API for post-processing, resulting in heat leak polygons with class labels. Finally, the annotated thermograms are returned to the web application for visualization and optional user adjustments.

As will be clear to the skilled person, the above section merely describes one form the method could take, and the invention is not limited in any way to this example: the controls could take various forms, and the output may be presented in a variety of ways.

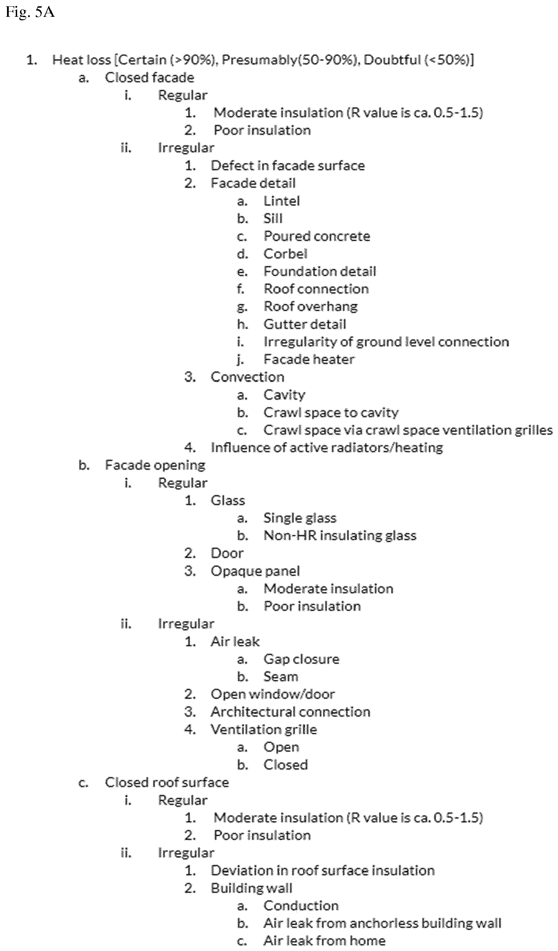

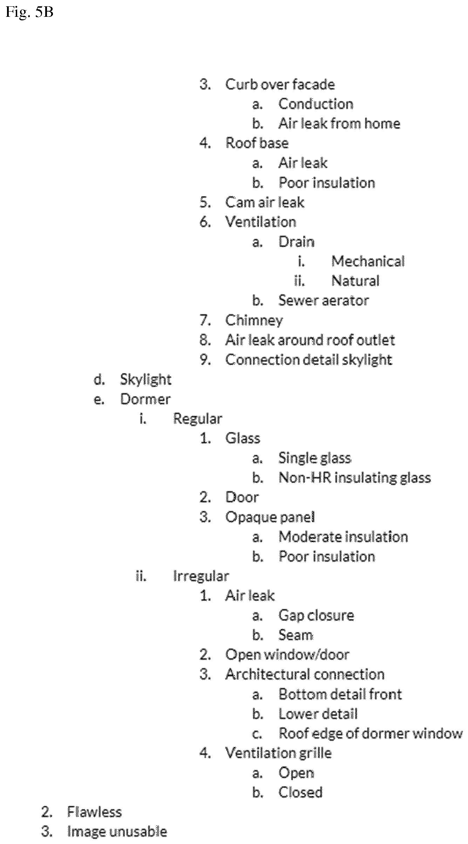

Fig. 5A and 5B show a possible hierarchical classification tree, for instance one suitable for houses in the Netherlands.

The tree consists of six depth levels. The first depth level corresponds to the identification of heat loss in a building without further specifications. At the next level it is indicated in what part of the building the heat loss is seen, and so on.

For each branch of the tree and at every depth level, it is possible to 'stop' by selecting the option "Unclear/miscellaneous" (this is not explicitly indicated in the figure). Furthermore, for each heat leakage that is identified the experts are asked to indicate how certain they are that the specified heat leakage is a problem for the building. This level of certainty is either "Certain (>90%)", "Presumably (50-90%)", or "Doubtful (<50%)". The expert is also asked to specify the boundary area for each thermogram, i.e. to indicate the part of the picture that is actually considered for the annotations. Finally, in case a thermogram is not reliable enough to annotate then the option "Image unusable" is selected.

Of course, this tree can be different for different types of structures, different countries/climates, different purposes etc. Fig. 5A and 5B are merely intended to illustrate the concept of a hierarchical classification tree. Furthermore, to account for differences in judgment, it may be advisable to determine the finally used labels based on the classifications from a plurality of different thermographers.

By processing both TIR image data and visible light image data through a properly trained hybrid convolutional neural network as described in this application, the presently proposed methods allow for fast yet accurate thermographic analysis, and as such represent a significant improvement over the prior art of record.

## Claims

1. Computer-implemented method for thermographic analysis, comprising the following steps:
acquiring thermal infrared (TIR) image data of a structure;
acquiring visible light image data of the structure;
processing the TIR image data through a first part of a convolutional neural network (CNN) to obtain a first intermediate result;
processing the visible light image data through a second part of the CNN to obtain a second intermediate result, the second part comprising a plurality of convolutional layers;
concatenating the first intermediate result and the second intermediate result to obtain a concatenated intermediate result;
processing the concatenated intermediate result to obtain thermographic analysis data, the thermographic analysis data including coordinates of identified segments of the input images associated with possible thermal leaks as well as an associated probability score for each identified segment; and
providing the thermographic analysis data to a user, preferably through a graphical user interface.

2. Method according to claim 1, wherein the processing of the concatenated intermediate result to obtain thermographic analysis data is performed through a third part of the CNN, the third part comprising a plurality of convolutional layers.

3. Method according to claim 1, wherein the first part of the CNN corresponds to an identity layer or comprises an identity layer.

4. Method according to claim 1 or 2, wherein the first part comprises a plurality of convolutional layers.

5. Method according to any of the previous claims, wherein the TIR image data has a first resolution and the visible light image data, which is preferably RGB image data, has a second resolution, and wherein the first resolution is lower than the second resolution, wherein
the method further includes a step of resampling the visible light image data to the first resolution; or
the second part of the CNN includes more pooling layers than the first part of the CNN; or
the method further includes a step of adapting the first and/or second intermediate results to make concatenation possible.

6. Method according to any of the previous claims, wherein the layers of the second part of the CNN are configured to form a sub-network with an architecture particularly suitable for segmentation of visible light image data, and wherein the second intermediate result includes segmentation results.

7. Method according to any of the previous claims, wherein providing the thermographic analysis data through the graphical user interface comprises displaying an estimated outline of the identified segments of the input images associated with possible thermal leaks together with the visible light image data, and preferably further comprises displaying the probability, as a number and/or through a visual indication, for example using color coding.

8. Method according to any of the previous claims, wherein the thermal analysis data further comprises classification information associated with each possible thermal leak, and/or a temperature profile for each possible thermal leak.

9. Method according to any of the previous claims, further comprising:
receiving user input indicating the selection of a possible thermal leak via the graphical user interface;
displaying the probability of the selected possible thermal leak being a thermal leak, preferably in combination with a classification and/or temperature profile for the selected possible thermal leak;
and/or
receiving user input indicating the selection of a position via the graphical user interface;
providing information from the input TIR image data for the selected position;
and/or
receiving user input indicating the setting of a probability threshold;
adapting the graphical indication of the possible thermal leaks in relation to the visible features of the structure according to the indicated probability threshold.

10. Method according to claim 9, comprising:
receiving user input via the graphical user interface indicating modifications to the output;
adapting the output according to the received user input,
wherein the adapted output is preferably used as training material for the CNN to further improve and refine the method;
wherein, in cases where the thermal analysis is provided using a plurality of polygons, the graphical user interface preferably allows a user to indicate removal, redrawing, and/or addition of polygons.

11. Method according to any of the previous claims, further comprising the steps of:
acquiring additional information about the structure relevant for the thermal properties of the structure;
providing the additional information as further input for the CNN, preferably at the concatenation step.

12. Computer-implemented method of training a neural network for use in thermographic analysis, preferably for use in the method of any of the previous claims, the method comprising the following steps:
providing training data including a plurality of annotated data points, each annotated data point including:
thermal infrared (TIR) image data of a structure;
visible light image data of the structure;
for each thermal leak identified by a thermographic expert based on at least the TIR image data:
coordinates of a polygon indicating the boundary of the thermal leak;
a class label, identifying a type of thermal leak, wherein the class label is selected from a hierarchical classification tree;
providing a convolutional neural network (CNN) comprising a first part; a second part comprising a plurality of convolutional layers; and a concatenation layer configured to concatenate the output of the first part and the output of the second part; and
training the CNN using the TIR image data of the annotated data points as the input for the first part, the visible light image data of the annotated data points as the input for the second part, and the coordinates and class labels for each identified thermal leak of the annotated data points as labels.

13. Method according to claim 12,
wherein the provided CNN comprises a third part comprising a plurality of convolutional layers, configured to process the combined output of the first part of the CNN and the output of the second part of the CNN; and/or
wherein the first part comprises a plurality of convolutional layers; and/or
wherein the initial weights for the provided CNN are randomly initialized weights; or wherein the initial weights for the provided CNN are obtained by pre-training at least a subset of the layers of the CNN using a different annotated dataset.

14. Method according to claim 12 or 13, further comprising the steps of:
performing one or more transformations on the input TIR image data and/or the input visible light image data to enhance the training set; and/or
setting all values of the visible light image data to zero for a subset of the annotated data points for a certain portion of the training time.

15. A computer-readable medium comprising instructions which, when executed by a computer, cause the computer to carry out the method of any of the previous claims.
